# NEUE EUROPÄISCHE PATENTSCHRIFT

(11) **EP 0 190 172 B2**
(45) Veröffentlichungstag und Bekanntmachung des Hinweises auf die Entscheidung über den Einspruch: **25.09.1996**
(45) Hinweis auf die Patenterteilung: 18.01.1989
(21) Anmeldenummer: 85903209.6
(22) Anmeldetag: 25.06.1985
(51) Int. Cl.: A01K 1/02

(54) **ABFERKELSTATION MIT ELEKTRONISCHER STEUERUNG**
FARROWING STATION WITH ELECTRONIC CONTROL FOR SOW
STATION DE MISE BAS POUR TRUIE A COMMANDE ELECTRONIQUE

(30) Priorität: 27.06.1984 DE 3423627
(43) Veröffentlichungstag der Anmeldung: 13.08.1986
(73) Patentinhaber: HOFMANN, Helmut, D-95189 Köditz (DE)
(72) Erfinder: HOFMANN, Helmut, D-95189 Köditz (DE)
(74) Vertreter: Steinmann, Otto C., Dr.
(86) Internationale Anmeldenummer: DE8500211
(87) Internationale Veröffentlichungsnummer: WO8600192

(56) Entgegenhaltungen:
- DE-A- 499 622
- GB-A- 932 189
- GB-A- 2 087 207

## Beschreibung

Die Erfindung bezieht sich auf eine Abferkelstation für Mutterschweine gemäss dem Oberbegriff des Patentanspruchs 1.

Insbesondere betrifft die Erfindung eine Abferkelbox, deren neuartige und vielfältige Technik dazu dient, dem Mutterschwein und allen neugeborenen Ferkeln vor, bei und nach der Geburt beste Voraussetzungen für ein ungetrübtes Leben zu schaffen. Sie ist dadurch gekennzeichnet, dass sich die Standfläche der Muttersau und die seitlichen Aufenthaltsräume der Ferkel in unterschiedliche Höhen bringen lassen und somit die Ferkel vollautomatisch von der Muttersau geschützt untergebracht werden.

Abferkelstationen bzw. Abferkelboxen und Abferkelkäfige sind in den verschiedensten Ausführungen bekannt. Im wesentlichen weisen sie folgende Merkmale auf:

Eine Eisenkonstruktin ist so ausgebildet, dass das Mutterschwein zwischen den seitlichen Trennrahmen (deshalb auch Sauentrennrahmen genannt) steht und sich nicht umdrehen kann. Die Vorderseite der Konstruktion wird von den Trog- und Eisenabsperrungen gebildet, während an der Rückseite ein sogenannter Ferkelschutzbügel als Teil der Tür die Absperrung bildet, soweit nicht das Mutterschwein durch Bauch- oder Schultergurtanbindung gehalten wird.

Abferkelstationen gemäss dem Oberbegriff des Patentanspruchs 1 sind insbesondere aus der GB-A-932 198 und der DE-A-499 622 bekannt.

Bei diesen bekannten Abferkelstationen erfolgt das Heben und Senken der seitlichen Aufenthaltsräume für die Ferkel manuell, d.h. eine Bedienungsperson verfährt zum Füttern der Ferkel die seitlichen Aufenthaltsräume auf die gleiche Höhe wie die Standfläche des Aufenthaltsraums für das Mutterschwein und verfährt nach dem Füttern die seitlichen Aufenthaltsräume wieder auf ein anderes Niveau, so dass die Ferkel nicht vom Mutterschwein getreten oder gar erdrückt werden können.

Diese Ausbildung hat jedoch den Nachteil, dass die Ferkel dennoch in dem Zeitraum, in dem sich die Aufenthaltsräume der Ferkel auf gleichem Niveau wie die Standfläche des Muttertieres befindet, gerade dann, wenn es sich bei dem Muttertier um ein unruhiges Tier handelt, getreten oder gar erdrückt werden können.

Darüberhinaus ist die Ausbildung der bekannten Abferkelstationen gemäss dem Oberbegriffs des Anspruchs 1 äusserst unpraktisch. Durch die über der Abferkelstation angebrachten Teile des Hebe- und Senkmechanismus wird der Zugang zur Station und darüberhinaus auch die Reinigung der Station erschwert.

Die Erfindung geht von der Erkenntnis aus, dass die Bedürfnisse der Tiere an erster Stelle stehen müssen. weil sie der Massstab der gesamten Angelegenheit sind und für die Beurteilung der gesamten Technik Verständnis liefern.
1. Die Muttersau braucht Ruhe und Ungestörtheit vor Lärm, Juckreiz durch Schmutz, Fliegen, Milben, Läusen, -unerfülltem Nestbautrieb, -Darmüberlastung, -falschem Raumklima -... usw.

Dadurch wird der Stoffwechsel, Kreislauf und Nervensystem entlastet und eine ruhigere und komplikationsfreie Geburt ermöglicht.
2. Die Ferkel bedürfen vom ersten Augenblick an Schutz vor dem Treten und Erdrücken durch das Muttertier, sobald es aufsteht und solange es nicht wieder ruhig liegt.

Alle Ferkel benötigen unverzüglich nach der Geburt die wichtige Kolostralmilch, die alle Abwehr- und Aufbaustoffe enthält, die bisher durch den Blutkreislauf kamen. (Pro Saugtakt werden innerhalb 15-20 Sekunden 5-8 g Kolostralmilch pro Strich bereitgestellt.

In den Saugphasen benötigen die Ferkel warme und sauerstoffreiche Frischluft sowie einen zugluftfreien, warmen Aufenthaltsraum, der hygienisch sauber und somit frei von Keimen, Bakterien, Viren, Pilzen, Fliegen, Milben und Läusen ist; - um sich für die nächste Saugphase (in den ersten Lebenstagen gibt es ca. 24 Saugphasen am Tag) wieder fit zu schlafen.

Der Erfindung liegt die Aufgabe zugrunde, eine Abferkelstation für Mutterschweine gemäss dem Oberbegriff des Patentanspruchs 1 derart weiterzubilden, dass die Ferkel zuverlässig vor Treten und Erdrücken durch das Mutterschwein sowie durch Quetschungen an beweglichen Teilen der Station geschützt sind und darüberhinaus die Reinigung der Station erleichtert wird.

Eine erfindungsgemässe Lösung dieser Aufgabe ist mit ihren Weiterbildungen in den Patentansprüchen gekennzeichnet.

Erfindungsgemäss ist ein unterflur angebrachter Heb- und Senkmechanismus mit einer elektronischen Steuerung vorgesehen, der das Heben und Senken der seitlichen Aufenthaltsräume bzw. der Standfläche des Muttertieres automatisch steuert. Durch den unter dem Boden der Station angeordneten Heb- und Senkmechanismus ist die Station leicht zugänglich. Die auf dem Boden der Aufenthaltsräume und der Standfläche des Muttertiers sowie teilweise auch auf den seitlichen Seitenwänden vorgesehene Matte erleichtert zum einen die Reinigung der Station, zum anderen schützt sie den unterflur angeordneten Heb- und Senkmechanismus.

Durch die erfindungsgemässe Ausbildung der Station kommt diese den Bedürfnissen des gebärenden und säugenden Muttertiers sowie der saugenden Ferkel bis zum «Läuferstadium der Ferkel» optimal entgegen, so dass sich die erfindungsgemässe Station insbesondere als «Wochenstation» eignet.

Der Erfindung liegt die Aufgabe zugrunde, die Wirtschaftlichkeit der Ferkelproduktion durch weitere Verringerung der Ferkelverluste zu erhöhen. Obgleich der bekannte technische Stand weitverbreitet ist und in den meisten Produktionsstätten Anwendung findet, sind die erzielten Aufzuchtergebnisse unbefriedigend. Das Aufzuchtsergebnis (d.h. Anzahl der pro Muttersau im Jahr aufgezogenen Ferkel), ist für die Wirtschaftlichkeit der Ferkelproduktion der entscheidenste Faktor. In der Bundesrepublik Deutschland werden z.B. im Durchschnitt aller gehaltenen Sauen weniger als 15 Ferkel pro Sau und Jahr aufgezogen. Diese Zahl ist bereinigt und amtlich belegt. Während in der organisierten Ferkelproduktion im Durchschnitt aller staatlich kontrollierten Betriebe die Zahl ebenfalls unter 18 liegt, erzielen nur wenige Spitzenbetriebe nachhaltig 20 Ferkel pro Sau und Jahr.

Die Aufgabenstellung wird um so dringlicher, als einerseits die Produktionskosten pro Sau und Jahr ständig steigen und den Marktwert von mehr als 15 Ferkel pro Sau und Jahr (ohne Arbeitslohnanspruch!) bereits überstiegen haben; andererseits der Zuchtfortschritt in der Schweinezucht sogar mehr als 20 aufgezogene Ferkel pro Sau und Jahr ohne weiteres ermöglichen würde, wenn nicht nach wie vor eine zu grosse Zahl von Ferkeln bei der Geburt bzw.in den ersten 8 Tagen nach der Geburt ums Leben kämen.

Der Erfindung lag somit die Aufgabe zugrunde, die bisher bereits vorhandene und angewandte Technik zu überprüfen und bei den praktizierten Produktionsverfahren nach Schwachstellen und Verbesserungsmöglichkeiten zu suchen. Ziel der Bemühungen wäre, den Bundesdurchschnitt von weniger als 15 Ferkel auf über 20 Ferkel pro Sau und Jahr zu steigern. Bei der Überprüfung der Voraussetzungen kam man zu der Feststellung, dass mehr als 90% aller Ferkelverluste in dem Zeitabschnitt 3 Tage vor der Geburt bis 7 Tage nach der Geburt eintreten, bzw. dass die Ursache eines späteren Verendens der Ferkel sicher in dem genannten Zeitabschnitt von 10 Tagen liegt.

Weiterbildungen der Erfindung sind in den Unteransprüchen gekennzeichnet. Hierzu wird im folgenden die erfindungsgemässe Abferkelstation gemäss Anspruch 1 sowie gemäss den in den Unteransprüchen angegebenen Weiterbildungen anhand der Zeichnungen näher erläutert, hier zeigen:

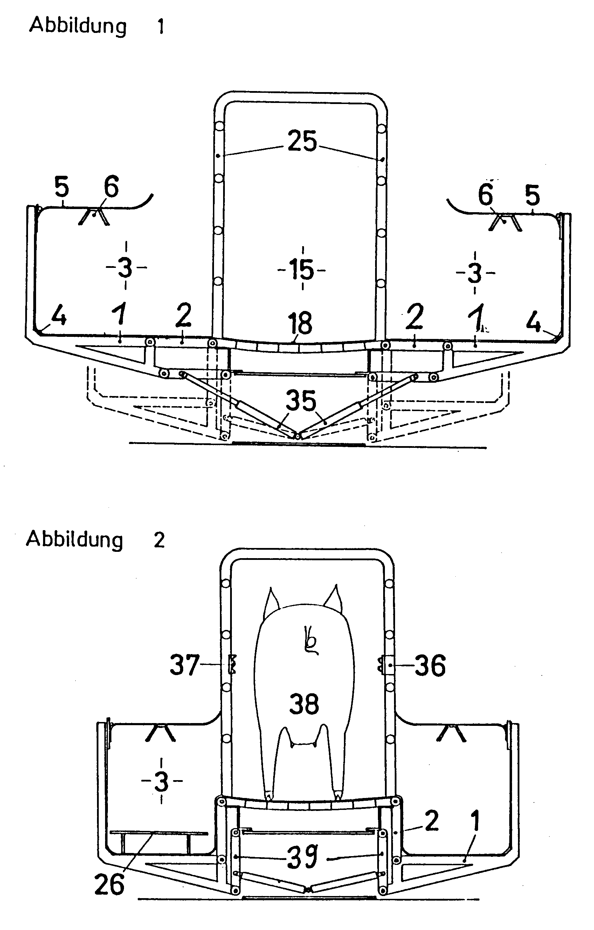

Fig. 1 Abferkelstation im Schnitt, Ferkelbereich hochgehoben,
Fig. 2 Abferkelstation im Schnitt, Ferkelbereich abgesenkt,

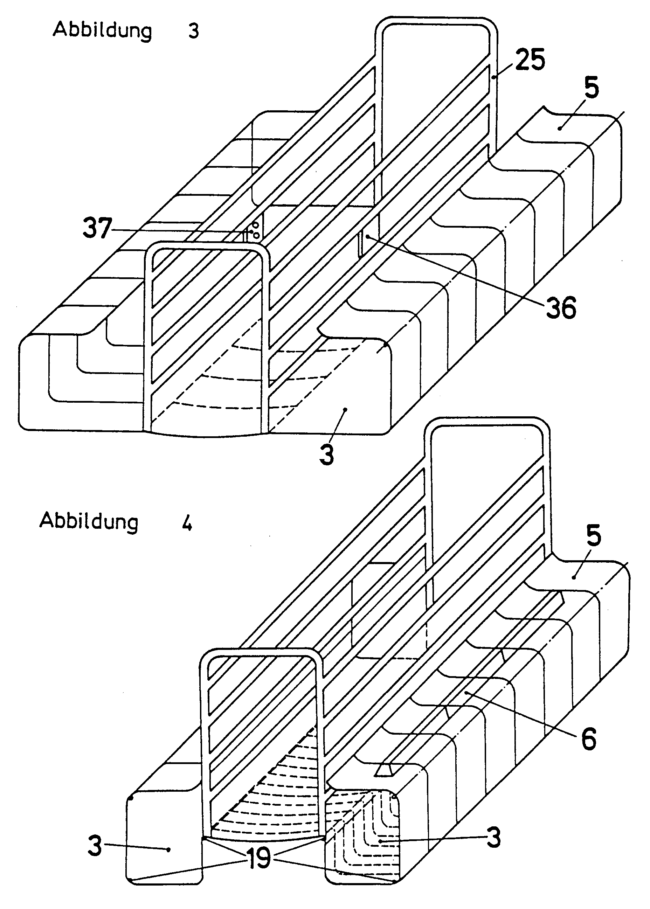

Fig. 3 Abferkelstation perspektivisch, Ferkelbereich hochgehoben,
Fig. 4 Abferkelstation perspektivisch, Ferkelbereich abgesenkt,

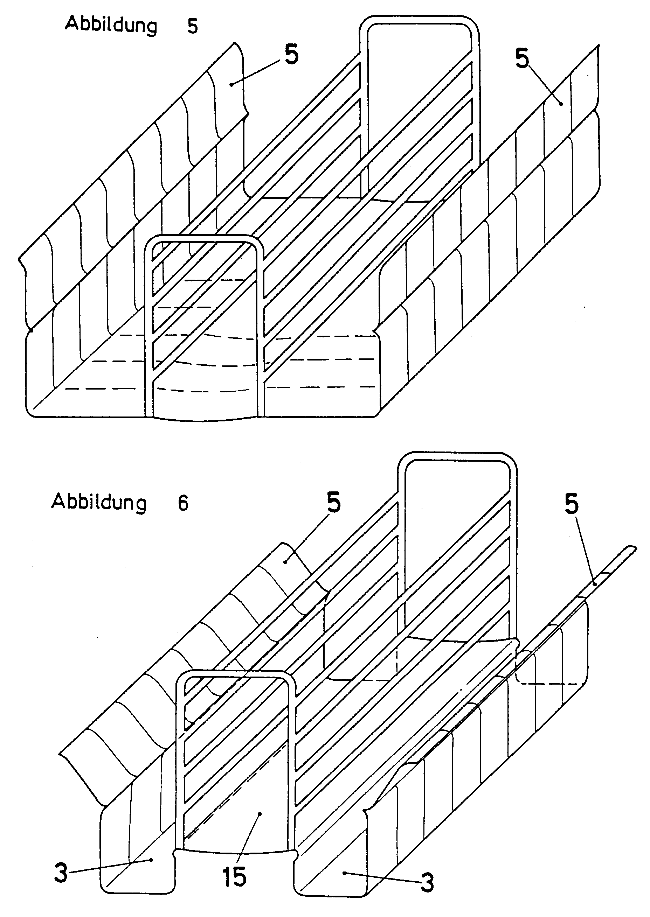

Fig. 5 Abferkelstation perspektivisch, Nest offen, hochgehoben,
Fig. 6 Abferkelstation perspektivisch, Nest offen, abgesenkt,

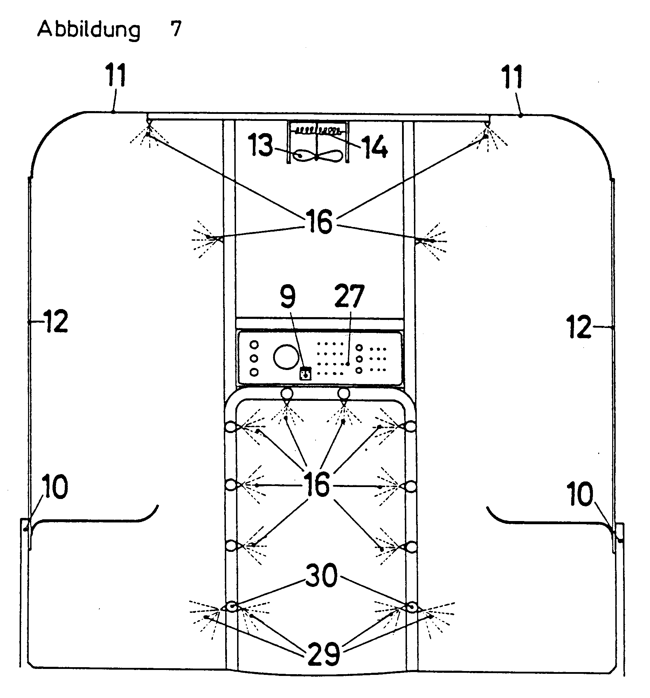

Fig. 7 Abferkelstation im Schnitt mit Umhüllung aus Plexiglas,

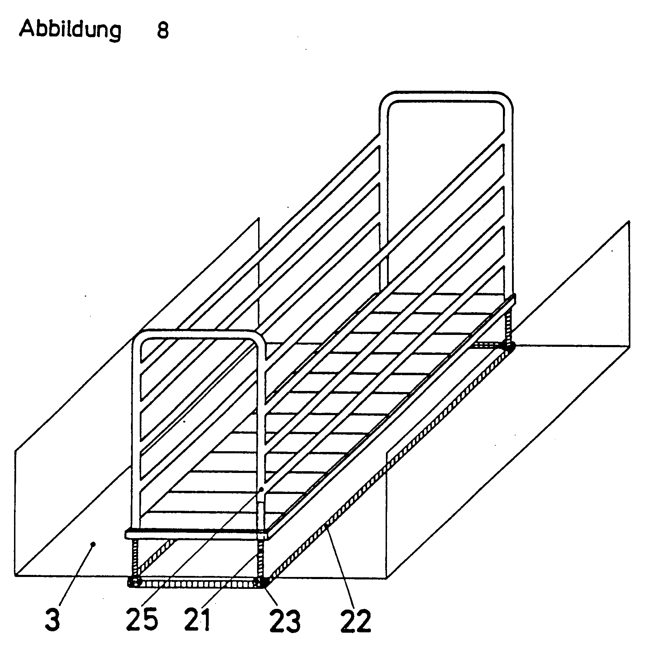

Fig. 8 Abferkelstation mit Spindelantrieb des Sauenbereichs, und

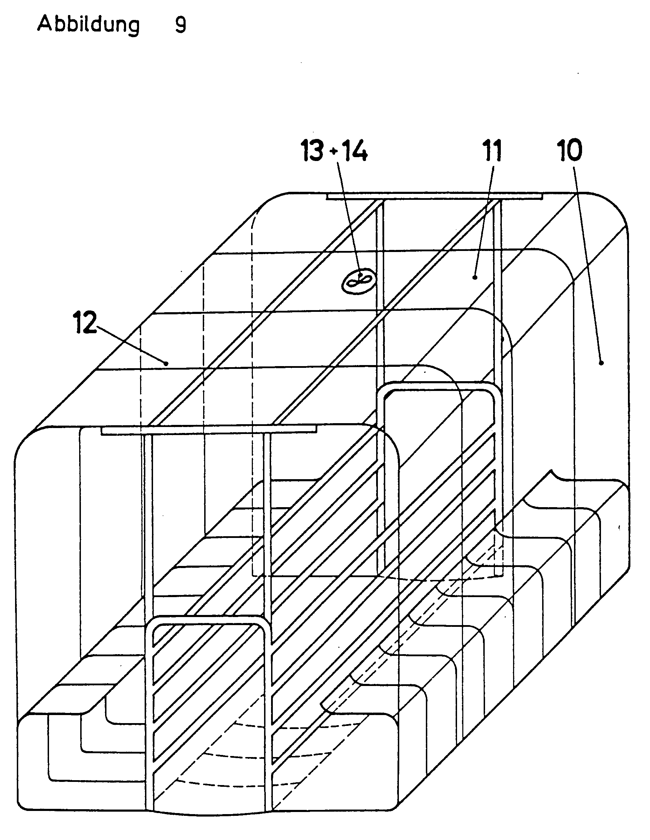

Fig. 9 Abferkelstation im Schnitt und perspektivisch.

In den Figuren bedeuten die folgenden Bezugszeichen
- 1.: Bodenflächen mit Parallelführung
- 2.: Fussbodenteil 90 Grad beweglich
- 3.: Ferkelnest, vollklimatisiert
- 4.: Gummimatte
- 5.: Plexiglasdächer
- 6.: Wärmestrahler
- 7.: Heizeinrichtung für Matte
- 8.: Thermostat für Ferkelheizung
- 9.: Computer
- 10.: Wände der Box
- 11.: Decke der Box
- 12.: Umhüllung der Box
- 13.: Lüftung der Box
- 14.: Heizung der Box
- 15.: Standfläche der Muttersau
- 18.: Sauennest mit Vertiefung
- 21.: Spindelantrieb
- 22.: Kette für Antrieb
- 23.: Kettenritzel
- 25.: Abferkelboxentrennrahmenständer
- 26.: Einrichtung zur Geburtsmeldung
- 27.: Schaltzentrale
- 29.: Frischluftausstrittsdüsen
- 30.: Unteres Rohr des Trennrahmens
- 35.: Druckzylinder
- 36.: Lichtschranke
- 37.: Reflektor
- 38.: Mutterschwein, stehend
- 39.: Pleule

Durch die Beheizbarkeit der Bodenteile wird eine Auskühlung der Ferkel in den teilweise kalten Stellen sicher vermieden.

Dem dient auch die im Anspruch 3 gekennzeichnete Weiterbildung. Durch die Hochklapp-Möglichkeit der s-förmigen Dächer ist bei optimalem Schutz der Ferkel eine gute Zugänglichkeit der Station gewährleistet. Bei der im Anspruch 4 gekennzeichneten Weiterbildung ist ferner die Beobachtbarkeit der Ferkel in den Aufenthaltsräumen sichergestellt.

Die in den Ansprüchen 5 bis 8 gekennzeichneten Ausbildungen sorgen für ein dem Aufzuchtergebnis in optimaler Weise entgegenkommendes Eigenklima der Station. Darüberhinaus ist durch die warme und sauerstoffreiche Frischluft sowie den zugluftfreien warmen Aufenthaltsraum, der hygienisch sauber sowie frei von Keimen, Bakterien, Viren, Pilzen, Milben und Läusen ist, sichergestellt, dass sich die Ferkel zwischen den einzelnen Saugphasen, von denen es bis zu 24 pro Tag gibt, erholen können.

Durch die erfindungsgemässe Ausbildung der Station, bei der eine elektronische Steuereinheit, beispielsweise ein Computer zur Steuerung der Heb- und Senkbewegung verwendet wird, sind eine Reihe von vorteilhaften Massnahmen möglich, die in den Ansprüchen 11 und 12 gekennzeichnet sind. Beispielsweise ist es möglich, dass Hochheben und Absenken des Bodens weiterhin mit Hand zu steuern, es ist aber auch mittels einer Lichtschranke oder eines Zeitprogramms steuerbar.

Durch die in den Ansprüchen 13 und 14 gekennzeichneten Massnahmen wird die Hygiene in der Station weiter verbessert.

Auch in den Ansprüchen 15 und 16 angegebenen Merkmale verbessern die Sicherheit, das Wohlbefinden der in der Station befindlichen Tiere sowie der Hygiene.

In den Ansprüchen 17 und 18 sowie 26 und 27 sind vorteilhafte Ausgestaltungen des Antriebsmechanismus angegeben.

## Patentansprüche

1. Abferkelstation für Mutterschweine mit einem geschlossenem Käfig (25) für das Muttertier (38), seitlichen Aufenthaltsräumen mit Seitenwänden für die Ferkel und einem Heb- und Senkmechanismus, mit dem sich die Standfläche des Muttertiers und die seitlichen Aufenthaltsräume der Ferkel in unterschiedliche Höhen bringen lassen, dadurch gekennzeichnet, dass der Heb- und Senkmechanismus unter dem Boden (1, 2, 15), der Station angeordnet, und mittels einer elektronischen Steuerung steuerbar ist.

2. Abferkelstation nach Anspruch 1, dadurch gekennzeichnet, dass auf dem Boden des Käfigs (15) und auf den Böden der Aufenthaltsräume (1, 2) sowie auf dem inneren Bereich der Seitenwände zum Schutz der Ferkel insbesondere vor Unterkühlung und Quetschungen sowie zum Schutz des Heb- und Senkmechanismus ein durchgehender und im Ferkelbereich beheizbarer Gummiboden vorgesehen ist.

3. Abferkelstation nach Anspruch 1 oder 2, dadurch gekennzeichnet, dass die Aufenthaltsräume für die Ferkel s-förmige Dächer aufweisen, die mit Scharnieren versehen sind, so dass sie nach dem Hochklappen einen guten Zugang zu den Aufenthaltsräumen der Ferkel ermöglichen.

4. Abferkelstation nach Anspruch 3, dadurch gekennzeichnet, dass die Dächer aus Plexiglas bestehen.

5. Abferkelstation nach Anspruch 3 oder 4, dadurch gekennzeichnet, dass an den Dächern der Aufenthaltsräume für die Ferkel thermostatisch geregelte Wärmestrahler vorgesehen sind.

6. Abferkelstation nach einem der Ansprüche 1 bis 5, dadurch gekennzeichnet, dass im Bodenbereich und insbesondere im Bereich der Aufenthaltsräume der Ferkel eine thermostatisch gesteuerte Heizeinrichtung vorgesehen ist.

7. Abferkelstation nach einem der Ansprüche 1 bis 6, dadurch gekennzeichnet, dass die Wände sowie die Decke der Aufenthaltsräume für die Ferkel aus wasserdichtem, geräuschdämmenden und durchsichtigem Kunststoff bestehen, so dass ein Eigenklima für die Aufenthaltsräume aufrechterhalten werden kann.

8. Abferkelstation nach Anspruch 7, dadurch gekennzeichnet, dass über die Standfläche der Muttersau eine steuerbare Lüftung und eine Heizung vorgesehen sind.

9. Abferkelstation nach einem der Ansprüche 1 bis 8, dadurch gekennzeichnet, dass jeder Aufenthaltsraum für die Ferkel eine als Parallelogramm ausgebildete Bodenfläche (1) aufweist, die hydraulisch oder pneumatisch hochgehoben und abgesenkt werden kann.

10. Abferkelstation nach einem der Ansprüche 1 bis 9, dadurch gekennzeichnet, dass die weiteren Bodenflächen als um ca. 90 Grad bewegliche Fussbodenteile (2) ausgebildet sind, so dass sie einerseits waagrecht liegend als Fussboden dienen, andererseits nach Herunterklappen als senkrecht stehende Wände dienen.

11. Abferkelstation nach einem der Ansprüche 1 bis 10, dadurch gekennzeichnet, dass das Hochheben und das Absenken des Bodens der Aufenthaltsräume für die Ferkel durch Handsteuerung oder mittels einer Lichtschranke durchführbar ist, die erfasst, ob das Muttertier liegt oder steht.

12. Abferkelstation nach Anspruch 11, dadurch gekennzeichnet, dass die elektronische Steuerung das Heben und Senken der Aufenthaltsräume der Ferkel zusätzlich nach einem Zeitprogramm steuert.

13. Abferkelstation nach einem der Ansprüche 1 bis 12, dadurch gekennzeichnet, dass rotierende und festangebrachte Wassersprühdüsen innerhalb der Abferkelstation angebracht sind, die eine vollautomatische Selbstreinigung sowie eine Desinfektion der gesamten Abferkelstation, als auch gegebenenfalls des Mutterschweins ermöglichen.

14. Abferkelstation nach einem der Ansprüche 1 bis 13, dadurch gekennzeichnet, dass ein Durchlaufdosiergerät für Reinigungs- und Desinfektionsmittel mit einem Magnetventil zwischengeschaltet ist, das die Steuerung betätigt.

15. Abferkelstation nach einem der Ansprüche 1 bis 14, dadurch gekennzeichnet, dass die Standfläche der Muttersau (15) nicht eben ist, sondern nach unten gewölbt ist und somit ein Sauennest (18) bildet.

16. Abferkelstation nach einem der Ansprüche 1 bis 15, dadurch gekennzeichnet, dass sämtliche Ecken im Bodenbereich zur Erhöhung der Sicherheit und zur Erleichterung der Reinigung abgerundet sind.

17. Abferkelstation nach einem der Ansprüche 1 bis 16, dadurch gekennzeichnet, dass in einer weiteren erfindungsgemässen Ausführung zur horizontalen Veränderung der Bodenteile (1, 2), die Standfläche der Muttersau (15) durch einen Spindelantrieb (21) mit Kette (22) und Kettenritzel (23) sowie Getriebemotor hochgehoben wird.

18. Abferkelstation nach Anspruch 17, dadurch gekennzeichnet, dass der Heb- und Senkmechanismus in den vier Ecken des Ständers der Abferkelbox eingebaut ist.

19. Abferkelstation nach einem der Ansprüche 1 bis 18, dadurch gekennzeichnet, dass zur Ferkelgeburtsmeldung im Aufenthaltsbereich der Ferkel eine Geburtsmelde-Einrichtung (26) vorgesehen ist.

20. Abferkelstation nach einem der Ansprüche 1 bis 19, dadurch gekennzeichnet, dass die Schaltung und Steuerung sämtlicher Funktionen sowohl per Hand als auch durch eine elektronische Steuerung vorgenommen werden können, und dass die elektronische Steuerung in der Mitte über den Sauentrennrahmen angebracht ist.

21. Abferkelstation nach einem der Ansprüche 1 bis 20, dadurch gekennzeichnet, dass der Computer in der Mitte über dem Sauentrennrahmen angebracht ist.

22. Abferkelstation nach einem der Ansprüche 1 bis 21, dadurch gekennzeichnet, dass die Fütterung sowie die Trinkwasserzuteilung über Sensoren im Futtertrog von einem Computer steuerbar sind.

23. Abferkelstation nach einem der Ansprüche 1 bis 22, dadurch gekennzeichnet, dass zur Belüftung des Ferkelnestes mit Frischluft ein separates Gebläse vorgesehen ist, das die Frischluft in die Sauentrennrahmen drückt, aus den sie über Austrittsdüsen (29), die am unteren Rohr (30) des Sauentrennrahmens angebracht sind, austritt.

24. Abferkelstation nach einem der Ansprüche 1 bis 23, dadurch gekennzeichnet, dass die Einstiegstufe in die Box nach Hochschwenken als Ferkelschutzbügel dient.

25. Abferkelstation nach einem der Ansprüche 1 bis 24, dadurch gekennzeichnet, dass zwischen den seitlichen Sauentrennrahmen im oberen hinteren Teil der Box eine muldenförmige Ablage vorgesehen ist.

26. Abferkelstation nach Anspruch 1, dadurch gekennzeichnet, dass zum Heben und Senken des Bodens der Aufenthaltsräume sich gegenseitig abstützende Hydraulikzylinder (35) vorgesehen sind.

27. Abferkelstation nach einem der Ansprüche 1 bis 26, dadurch gekennzeichnet, dass der Gummifussboden (4) im Sauenbereich (18) sowie im Ferkelbereich (1) fest mit der Unterlage verschraubt ist, während er am Fussbodenteil (2) nicht befestigt ist und somit bei der Schwenkbewegung des Fussbodenteils (2) auf der Unterlage rutschen kann.

28. Abferkelstation nach einem der Ansprüche 1 bis 27, dadurch gekennzeichnet, dass eine Wassertränke für Ferkel vorgesehen ist, die ständig eine geringe Menge frisches Wasser vorrätig bereithält und die computergesteuert in zeitlichen Folgen durch stossartigen Wasserstoss befüllt wird und dabei gleichzeitig vom alten Inhalt freigespült wird.

29. Abferkelstation nach einem der Ansprüche 1 bis 28, dadurch gekennzeichnet, dass die beiden absenkbaren Ferkelbereiche (1, 2, 3) auch getrennt und einzeln, sowie abwechselnd hochgehoben werden können.

## Claims

1. Farrowing station for sows, including a closed cage (25) for the sow (38), lateral store pens with lateral walls for the piglets, as well as an elevating and lowering mechanism to place the base on which the sow is standing and to lateral piglet store pens at different levels,
**characterized** in that said elevating and lowering mechanism is arranged under the floor (1, 2, 15) of the station and can be controlled by means of an electronic controlling system.

2. Farrowing station according to Claim 1,
**characterized** in that a continuous heatable rubber flooring is provided in the piglet zone on the floor of the cage (15) and on the floors of the piglet store pens (1,2) as well as on the inner section of the lateral walls so as to provide for protection of the piglets specifically against undercooling and contusion, as well as to protect the elevating and loewring mechanism.

3. Farrowing station according to Claim 1 or 2,
**characterized** in that the piglet store pens are provided with S-shaped roof-ings with hinges so that they can be tilted upward to provide for good access to the piglet store pens.

4. Farrowing station according to Claim 3,
**characterized** in that the roofings are made of safety or plexi-glass.

5. Farrowing station according to Claim 3 or 4,
**characterized** in that thermostat-controlled heat radiators are provided at the roofings of the piglet store pens.

6. Farrowing station according to any of Claims 1 through 5,
**characterized** in that a thermostat-controlled heating system is provided in the floor area and particularly in the area of the piglet store pens.

7. Farrowing station according to any of Claims 1 through 6,
**characterized** in that the walls as well as the ceiling of the piglet store pens are made of water-tight, sound-insulating and transparent plastic material so that an appropriate inside climate may be maintained in the store pens.

8. Farrowing station according to Claim 7,
**characterized** in that a controllable ventilation system and a heating system are provided above the base on which the sow is standing.

9. Farrowing station according to any of Claims 1 through 8,
**characterized** in that each piglet store pen has a floor surface (1) designed as a parallelogram which is suited for hydraulic or pneumatic elevation and lowering.

10. Farrowing station according to any of Claims 1 through 9,
**characterized** in that the other floor areas are designed as floor elements (2) pivotable through 90° approximately, so that they may serve, in the horizontal position, as floor area and, after tilting downward, as vertical walls.

11. Farrowing station according to any of Claims 1 through 10,
**characterized** in that the elevation and lowering of the floor of the piglet store pens can be realized either under manual control or by means of a light barrier detecting whether the sow is resting or standing upright.

12. Farrowing station according to Claim 11,
**characterized** in that the electronic controller provides for control of the elevation and lowering of the piglet store pens additionally in accordance with a timing programme.

13. Farrowing station according to any of Claims 1 through 12,
**characterized** in that rotating and fixed water spray nozzles are arranged inside the farrowing station so as to provide for fully automatic cleaning and disinfection of the entire farrowing station and, whenever necessary, of the sow as well.

14. Farrowing station according to any of Claims 1 through 13,
**characterized** in that a continuous dosing device is inserted to supply detergents and disinfecting agents, and includes a solenoid which is operated by the controller.

15. Farrowing station according to any of Claims 1 through 14,
**characterized** in that the base on which the sow is standing (15) is bulging downward rather than being flat, so as to form a sow's bed (18).

16. Farrowing station according to any of Claims 1 through 15,
**characterized** in that all corners in the floor area are rounded off so as to increase the safety and to facilitate cleaning.

17. Farrowing station according to any of Claims 1 through 16,
**characterized** in that in another inventive embodiment, for horizontal displacement of the floor elements (1, 2), the base on which the sow is standing (15) is elevated by means of a spindle drive (21) including a chain (22) and a sprocket (23) as well as a geared engine.

18. Farrowing station according to Claim 17,
**characterized** in that the elevating and lowering mechanism is installed in the four corners of the stand of the farrowing pen.

19. Farrowing station according to any of Claims 1 through 18,
**characterized** in that a farrowing signal communication device (26) is provided in the piglet store pen to signal the birth of piglets.

20. Farrowing station according to any of Claims 1 through 19,
**characterized** in that all functions can be switched and controlled both by hand and by means of an electronic controller, and that the electronic controller is arranged centrally above the farrowing rails.

21. Farrowing station according to any of Claims 1 through 20,
**characterized** in that the computer is arranged centrally above the farrowing rails.

22. Farrowing station according to any of Claims 1 through 21,
**characterized** in that feeding and drinking-water supply can be controlled by a computer operating via sensors in the feeding trough.

23. Farrowing station according to any of Claims 1 through 22,
**characterized** in that a separate blower is provided to ventilate the piglets' bed with fresh air, the said blower pressing fresh air into the farrowing rails including air outlet nozzles (29) arranged at the lower tube (30) of the farrowing rails.

24. Farrowing station according to any of Claims 1 through 23,
**characterized** in that the entering step leading into the box can be tilted up so as to serve as a guard rail protecting the piglets.

25. Farrowing station according to any of Claims 1 through 24,
**characterized** in that a trough-shaped deposit is provided between the lateral farrowing rails in the upper rear part of the pen.

26. Farrowing station according to Claim 1
**characterized** in that mutually supporting hydraulic cylinders (35) are provided to elevate and lower the floor of the store pens.

27. Farrowing station according to any of Claims 1 through 26,
**characterized** in that the rubber floor (4) in the sow's zone (18) as well as in the piglets' zone (1) is tightly screwed to the base whereas it is not fixed at the floor element (2) so that it may glide on the base when the floor element (2) is moved.

28. Farrowing station according to any of Claims 1 through 27,
**characterized** in that a drinking trough is provided for the piglets, which constantly contains a slight quantity of fresh water and is refilled, under computer timing control, by intermittent water jets while its stale water volume is simultaneously flushed out.

29. Farrowing station according to any of Claims 1 through 28,
**characterized** in that the two lowerably piglet areas (1, 2, 3) may be elevated both separately and individually, as well as alternately.

## Revendications

1. Station de mise bas pour des truies, comprenant une cage (25) pour la truie (38), des places de séjour latérales aux parois latérales pour les cochons, ainsi qu'un mécanisme de levage et d'abaissement pour le déplacement de l'assise de la truie et des places latérales de séjour des cochons aux niveaux différents,
**caractérisée en ce** que ledit mécanisme de levage et de l'abaissement est disposé au dessous du sol (1, 2, 15) de la station, en étant réglable au moyen d'un système de réglage électronique.

2. Station de mise bas selon la Revendication 1,
**caractérisée en ce** qu'au sol de la cage (15) et sur le sol des places de séjour (1,2) ainsi que sur la zone intérieure des parois latérales, un plancher continu en caoutchouc et chauffable dans la zone de cochons est pourvu pour la protection des cochons en particulier contre le refroidissement excessif et contre contusions, ainsi qu'à la protection du mécanisme de levage et de l'abaissement.

3. Station de mise bas selon la Revendication 1 ou 2,
**caractérisée en ce** que les places de séjour pour les cochons sont pourvues des toits en S aux charnières, d'une façon qu'elles permettent, après leur repliage vers le haut, une bonne accessibilité aux places de séjour des cochons.

4. Station de mise bas selon la Revendication 3,
**caractérisée en ce** que les toits sont produits de plexiglas.

5. Station de mise bas selon la Revendication 3 ou 4,
**caractérisée en ce** que des radiateurs thermiques réglés par thermostat sont pourvus aux toits des places de séjour des cochons.

6. Station de mise bas selon quelconque des Revendications 1 à 5,
**caractérisée en ce** que dans la zone du plancher et préférablement dans la zone des places de séjour des cochons, un dispositif de chauffage à réglage par thermostat est pourvu.

7. Station de mise bas selon quelconque des Revendications 1 à 6,
**caractérisée en ce** que les parois ainsi que le plafond des places de séjour des cochons sont produits d'une matière plastique transparante, étanche à l'eau, à isolation phonique, d'une façon qu'un climat propre se peut maintenir dans les places de séjour.

8. Station de mise bas selon la Revendication 7,
**caractérisée en ce** qu'au dessus de l'assise de la truie un système de ventilation réglable et un système de chauffage sont pourvus.

9. Station de mise bas selon quelconque des Revendications 1 à 8,
**caractérisée en ce** que chaque place de séjour pour les cochons comprend une surface de plancher (1) sous forme d'un parallèlogramme, pour le levage et l'abaissement au moyen d'un système hydraulique ou pneumatique.

10. Station de mise bas selon quelconque des Revendications 1 à 9,
**caractérisée en ce** que les autres surfaces de plancher sont formés comme des éléments de plancher (2) si mobile de 90° environ qu'elles servent, en position horizontale, comme plancher et de même, après leur repliage vers le bas, comme parois verticales.

11. Station de mise bas selon quelconque des Revendications 1 à 10,
**caractérisée en ce** que le levage et l'abaissement du plancher des places de séjour des cochons se peut réaliser par commande à main ou au moyen d'un barrage photoélectrique à détecter si la truie soit en repos ou en debout.

12. Station de mise bas selon la Revendication 11,
**caractérisée en ce** que le système de commande électronique règle le levage et l'abaissement des places de séjour des cochons aussi selon un programme séquence-temps.

13. Station de mise bas selon quelconque des Revendications 1 à 12,
**caractérisée en ce** que des atomiseurs d'eau rotatifs fixes sont disposés à l'intérieur de la station de mise bas, qui permettent le nettoyage et la désinfection automatique de toute la station de mise bas ainsi que de la truie, si nécessaire.

14. Station de mise bas selon quelconque des Revendications 1 à 13,
**caractérisée en ce** qu'un dispositif de dosage à passage continu à une électrovanne est intercalé pour des détergents et des désinfectants, qui est commandé par le système de réglage.

15. Station de mise bas selon quelconque des Revendications 1 à 14,
**caractérisée en ce** que l'assise de la truie (15) n'est pas plan mais bombée vers le bas, en formant un nid de truie (18).

16. Station de mise bas selon quelconque des Revendications 1 à 15,
**caractérisée en ce** que tous les coins dans la zone du plancher sont arrondis afin d'augmenter la sécurité et de faciliter le nettoyage.

17. Station de mise bas selon quelconque des Revendications 1 à 16,
**caractérisée en ce** que, dans une autre réalisation selon la présente invention, l'assise de la truie (15) et levée au moyen d'un mécanisme de commande à broche (21), comprenant une chaîne (22) et une roue à chaîne (23), ainsi qu'un moto-réducteur, pour un déplacement horizontal des éléments (1, 2) du sol.

18. Station de mise bas selon la Revendication 17,
**caractérisée en ce** que le mécanisme de levage et de l'abaissement est installé aux quatre coins du cadre des barres flancs du box de mise bas.

19. Station de mise bas selon quelconque des Revendications 1 à 18,
**caractérisée en ce** qu'un dispositif de signalisation de la mise bas (26) est pourvu pour signaler la mise bas des cochons dans la place de séjour des cochons.

20. Station de mise bas selon quelconque des Revendications 1 à 19,
**caractérisée en ce** que des moyens sont pourvus pour commander et régler tous les fonctions non seulement à la main mais aussi par asservissement électronique, et que le système de réglage électronique est disposé au centre au dessus du cadre de barres flancs.

21. Station de mise bas selon quelconque des Revendications 1 à 20,
**caractérisée en ce** que l'ordinateur est disposé au centre au dessus du cadre de barres flancs.

22. Station de mise bas selon quelconque des Revendications 1 à 21,
**caractérisée en ce** que l'affouragement ainsi que le dosage de l'eau potable sont réglable par un ordinateur, moyennant des détecteurs dans la mangeoire.

23. Station de mise bas selon quelconque des Revendications 1 à 22,
**caractérisée en ce** qu'un ventilateur externe est pourvu pour la ventilation du nid des cochons par de l'air frais, qui presse de l'air frais dans les cadres de barres flancs par lesquels l'air passe, en sortant par des tuyères de sortie (29) au tube inférieure (30) du montant des barres flancs.

24. Station de mise bas selon quelconque des Revendications 1 à 23,
**caractérisée en ce** qu'une montée d'accès dans le box est utilisable, après pivotage vers le haut, comme un étrier garde-cochons.

25. Station de mise bas selon quelconque des Revendications 1 à 24,
**caractérisée en ce** qu'un récepteur en forme d'auge est pourvu entre les cadres latérales des barres flancs, dans la partie supérieure derriere du box.

26. Station de mise bas selon la Revendication 1,
**caractérisée en ce** que des vérins hydrauliques (35) sont pourvus pour le levage et l'abaissement du sol des places de séjour, qui s'appuient l'un sur l'autre.

27. Station de mise bas selon quelconque des Revendications 1 à 26,
**caractérisée en ce** que le plancher en caoutchouc (4) dans la zone de la truie (18) ainsi que dans la zone des cochons (1) est fixé à l'appui par vissage pendant qu'il n'est pas fixé à l'élément de plancher (2) afin qu'il puisse glisser sur l'appui pendant le mouvement pivotant de l'élément de plancher (2).

28. Station de mise bas selon quelconque des Revendications 1 à 27,
**caractérisée en ce** qu'un abreuvoir est pourvu pour les cochons, qui tient constamment une petite quantité de l'eau fraîche disponible et qui est rempli, sous le réglage par l'ordinateur, successivement par un chasse intermittant de l'eau, et est, en même temps, vidé par rinçage de sa contenance pas encore fraîche.

29. Station de mise bas selon quelconque des Revendications 1 à 28,
**caractérisée en ce** que les deux zones abaissables des cochons (1, 2, 3) sont pourvues pour un levage individuelle et séparée et encore pour un levage en alternance.
